(19) Europäisches Patentamt

European Patent Office

Office européen des brevets

(11) **EP 1 060 634 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(21) Anmeldenummer: **98964379.6**

(22) Anmeldetag: **03.12.1998**

(51) Int Cl.⁷: **H04Q 11/04**, H04L 12/56

(86) Internationale Anmeldenummer:
**PCT/DE1998/003563**

(87) Internationale Veröffentlichungsnummer:
**WO 1999/045739 (10.09.1999 Gazette 1999/36)**

(54) **VERFAHREN ZUR BESTIMMUNG DER ERFORDERLICHEN BITRATE FÜR EINE ANZAHL STATISTISCH MULTIPLEXBARER KOMMUNIKATIONSVERBINDUNGEN**

METHOD FOR DETERMINING THE REQUIRED BIT RATE FOR A NUMBER OF COMMUNICATIONS CONNECTIONS WHICH CAN BE STATISTICALLY MULTIPLEXED

PROCEDE POUR DETERMINER LE DEBIT BINAIRE NECESSAIRE A UN CERTAIN NOMBRE DE LIAISONS DE TRANSMISSION A MULTIPLEXAGE STATISTIQUE

(84) Benannte Vertragsstaaten:
**AT BE CH DE ES FR GB IT LI NL**

(30) Priorität: **03.03.1998 DE 19808947**

(43) Veröffentlichungstag der Anmeldung:
**20.12.2000 Patentblatt 2000/51**

(73) Patentinhaber: **SIEMENS AKTIENGESELLSCHAFT**
**80333 München (DE)**

(72) Erfinder: **HAAS, Ulrich**
**D-82256 Fürstenfeldbruck (DE)**

(56) Entgegenhaltungen:
**EP-A- 0 433 699          EP-A- 0 584 029**
**US-A- 5 548 581**

• **ABE S ET AL: "A TRAFFIC CONTROL METHOD FOR SERVICE QUALITY ASSURANCE IN AN ATM NETWORK" IEEE JOURNAL ON SELECTED AREAS IN COMMUNICATIONS, Bd. 12, Nr. 2, 1. Februar 1994, Seiten 322-331, XP000458651**

**Beschreibung**

Die Erfindung betrifft ein Verfahren zur Berechnung der benötigten Bitrate einer Anzahl statistisch multiplexbarer Kommunikationsverbindungen sowie ein Verfahren zur Steuerung der Annahme oder Ablehnung einer neuen Verbindung auf einer ATM-Kommunikationseinrichtung mit einer Kapazität $R_{max}$, die bereits eine Anzahl M statistisch multiplexbarer Verbindungen abwickelt.

Im asynchronen Transfermodus (ATM) werden Daten unabhängig von der durch sie repräsentierten Information (Sprachkommunikation, Datenkommunikation, Multimedia) in Zellen zu 53 Byte (48 Byte Nutzdaten und 5 Byte Steuerdaten) übertragen. Die Netzressourcen einer Kommunikationseinrichtung wie beispielsweise eines Multiplexers, einer Leitung oder eines Koppelfeldes werden dabei von Verbindungen mit unterschiedlichen Dienstgüte- und Bitratenanforderungen gemeinsam benutzt. Dabei muß durch eine sogenannte Verkehrssteuerung gewährleistet werden, daß trotz der gemeinsamen Übertragung von Datenzellen verschiedener Herkunft, verschiedener Bitraten und verschiedener Bitratenstatistiken die erforderliche Übertragungsgüte der ATM-Schicht sichergestellt ist. Insbesondere muß gewährleistet sein, daß die Zellverlustwahrscheinlichkeit sehr gering, beispielsweise kleiner als $10^{-10}$ ist und die Übertragungszeitschwankungen der Zellen einen bestimmten Wert nicht überschreiten.

In einem ATM-Netz sind verschiedene Verbindungstypen möglich, die sich durch ihre Bitratenstatistik unterscheiden. Eine Verbindung mit einer **konstanten Bitrate** oder deterministischen Bitrate weist über die gesamte Verbindungsdauer eine feste Übertragungsbitrate (-zellrate) auf. Diese Bitrate muß vom Netz ständig zur Verfügung gestellt werden. Dieser Verbindungsstyp ist besonders geeignet für Echtzeitanwendungen, wie beispielsweise Sprachkommunikation, bei denen strenge Anforderungen an die Zellverzögerungsschwankungen gestellt werden und die eine nahezu konstante Senderate aufweisen.

Ein weiterer Verbindungstyp ist die **verfügbare Bitrate,** wobei die Daten je nach momentan verfügbarer Netzkapazität übertragen werden. Dieser Verbindungstyp eignet sich nicht für Echtzeitanwendungen, aber beispielsweise als preiswerte Datenübertragung wie beispielsweise e-mail.

Bei dem Verbindungstyp **statistische Bitrate** werden die zu übertragenden Daten einer virtuellen Verbindung mit einer zeitlich schwankenden Senderate übertragen. Beispiele eines solchen Verbindungstyps sind Videoverbindungen, bei denen die Videosignale mit variabler Bitrate codiert werden und Sprachkommunikation mit Pausenunterdrückung sowie bestimmte Datenübertragungsdienste. Verbindungen mit statistischer Bitrate, bei denen die mittlere Bitrate deutlich unter der maximalen Bitrate liegt, eignen sich zum **statistischen Multiplexen**. Dabei werden viele Verbindungen mit statistischer Bitrate über eine gemeinsame Leitung oder ein gemeinsames Koppelfeld geführt, wobei es nicht notwendig ist, für jede einzelne Verbindung die maximale Bitrate zu reservieren, da viele unkorrelierte Verbindungen mit im Vergleich zur maximalen Bitrate niedriger mittlerer Bitrate die vorhandene Übertragungskapazität im Mittel teilen. Es ist so möglich, die Leitung zu einem gewissen Grad zu "überbuchen". Die Netzwerkinfrastruktur kann so insgesamt besser ausgenutzt werden.

Um für eine Anzahl voneinander unabhängiger Kommunikationsverbindungen mit statistischer Bitrate seitens des Netzbetreibers eine genügende Kapazität bereitstellen zu können, müssen durch technische Vorkehrungen an den Endgeräten oder dergleichen in einem sogenannten Verkehrsvertrag die Einhaltung bestimmter Verkehrsparameter sichergestellt werden. Der Verkehrsvertrag regelt dabei unter anderem die maximale Bitrate (bzw. maximale Zellrate Peak Cell Rate, PCR) und die mittlere Bitrate bzw. entsprechende mittlere Zellrate (Sustainable Cell Rate, SCR). Die maximale Zellrate PCR gibt dabei die maximal von der Verbindung beanspruchte Anzahl von ATM-Zellen pro Zeiteinheit und die mittlere Zellrate SCR die über einen längeren Zeitraum zulässige mittlere Anzahl von ATM-Zellen pro Zeiteinheit an.

Das Problem bei der Verbindungsannahmesteuerung statistisch multiplexbarer Verbindungen, d. h. Verbindungen mit statistischer Bitrate, bei denen das Verhältnis von maximaler Bitrate zu mittlerer Bitrate oberhalb eines gewissen Werts ist, liegt darin, einerseits Zellverluste zu vermeiden, die durch gleichzeitiges Senden von vielen Verbindungen mit hoher Bitrate auftreten können, und andererseits eine möglichst hohe Auslastung der ATM-Verbindung oder der ATM-Kommunikationseinrichtung zu ermöglichen. Verschiedene solcher Verbindungsannahmeverfahren sind bekannt.

Eine Möglichkeit ist, für jede Kommunikationsverbindung die maximale Bitrate PCR zu reservieren. Damit können Zellverluste aufgrund einer Überlastung der Kommunikationsverbindung nicht auftreten, jedoch können die Vorteile des statistischen Multiplexen, d. h. die bessere Auslastung der Kommunikationseinrichtung durch voneinander unabhängige Verbindungen schwankender Zellrate nicht genutzt werden.

Wird andererseits für jede Verbindung nur die mittlere Zellrate SCR reserviert, so treten schon bei geringen Schwankungen der Gesamtzellrate nicht tolerierbare Zellverluste auf. Lediglich bei einer sehr hohen Anzahl voneinander unabhängiger Verbindungen nähert sich die zur zellverlustfreien Übertragung der Verbindungen benötigte Kapazität der Summe der mittleren Zellraten der einzelnen Verbindungen an.

Ein bekanntes Verfahren zur Steuerung der Annahme statistisch multiplexbarer Verbindungen ist die sogenannte Sigma-Rule, die in dem europäischen Patent EP 0 433 699 B1 und in Rathgeb, Wallmeier "ATM-Infrastruktur für die Hochleistungskommunikation", Seiten 148 bis 150, beschrieben ist. Dabei wird eine zusätzliche Verbindung neben einer Anzahl M bereits bestehender Verbindungen dann noch angenommen, falls eine obere Abschätzung der zur Übertragung der M+1 Verbindungen notwendigen Übertragungsbitrate kleiner oder gleich der maximalen Bitrate $R_{max}$ der Kommunikationseinrichtung ist.

Die Abschätzung der erforderlichen Kapazität ist bei der Sigma-Rule gegeben durch die Addition der Summe $S_{M+1} = \sum SCR_1$ der mitleren Zellraten der M+1 statistisch multiplexbaren Verbindungen zu einem Faktor $Q(R)*\sqrt{V}_{M+1}$, wobei $Q(R)$ eine Quantil-Funktion ist, die das statistische Verhalten der Verbindungen in Abhängigkeit von der benötigten Bitrate angibt, und V eine Abschätzung für die Varianz der Bitraten der M+1 Verbindungen ist.

Wird die Kapazität einer Übertragungseinrichtung mit anderen Verkehrsarten geteilt, z. B. Verkehr mit unspezifizierter Bitrate oder verfügbarer Bitrate, so ist die Kapazität R, die für den zu multiplexenden Verkehr zur Verfügung steht, nicht mehr bekannt.

Bisher wird die Sigma-Rule bei diesem Problem erweitert und die Kapazität der M bereits reservierten Verbindungen als Entscheidungsparameter für die Annahme der M+1-ten Verbindung hinzugezogen. Iterativ wird diese Kapazität beim Einrichten weiterer Verbindungen erhöht und zwar um die mittlere Zellrate der hinzukommenden Verbindung, falls die Sigma-Rule die Verbindung für diese Kapazität annehmen würde, ansonsten um die Spitzenzellrate. Durch diese Vorgehensweise ist die ermittelte Kapazität von der Einrichtereihenfolge abhängig.

Der Erfindung liegt daher die Aufgabe zugrunde, ein Verfahren zur Steuerung der Annahme oder Ablehnung einer neuen Verbindung einer ATM-Kommunikationseinrichtung mit einer gegebenen Kapazität $R_{max}$ vorzuschlagen, die unabhängig von der Reihenfolge der Annahme der Verbindungen der Kommunikationseinrichtung ist.

Gelöst wird die Aufgabe durch ein in Anspruch 1 beschriebenes Verfahren zur Steuerung der Annahme oder Ablehnung einer neuen Verbindung auf der ATM-Kommunikationseinrichtung.

Die neue Verbindung ist durch ihre Spitzenzellrate PCR und ihre mittlere Zellrate SCR gekennzeichnet. Durch das erfindungsgemäße Verfahren wird die Summe $P_{M+1} = \Sigma PCR_i$ der Spitzenzellraten sowie die Summe $S_{M+1} = \Sigma SCR_i$ der mittleren Zellraten der bestehenden und der neuen Verbindungen und die Varianz V der Zellraten bestimmt. In Abhängigkeit von diesen Größen wird die benötigte Kapazität $load_{M+1}$ der M+1 Verbindungen ermittelt und die neue Verbindung angenommen, falls die benötigte Kapazität $load_{M+1}$ kleiner oder gleich der maximalen Kapazität $R_{max}$ der ATM-Kommunikationseinrichtung ist.

Im Gegensatz zu der bekannten Sigma-Rule wird bei dem erfindungsgemäßen Verfahren die insgesamt benötigte Kapazität $load_{M+1}$ exakt berechnet. Es wird nicht nur bestimmt, ob eine neue Verbindung eingerichtet werden kann oder nicht. Dadurch ist das durch das erfindungsgemäße Verfahren erzielte Ergebnis unabhängig von der Reihenfolge, in der die Verbindungen eingerichtet werden.

Da die benötigte Kapazität und damit auch die momentan verfügbare freie Kapazität berechnet wird, kann diese Benutzern oder Managementzentren der Kommunikationseinrichtung mitgeteilt werden, wodurch eine effektivere Ausnutzung des Netzes ermöglicht wird.

Bei einer Variante des erfindungsgemäßen Verfahrens gemäß Anspruch 2 wird die Verbindung dann angenommen, falls das Minimum der Größen $load_{M+1}$ und $P_{M+1}$ kleiner oder gleich der maximalen Kapazität $R_{max}$ ist. Falls die berechnete Kapazität $load_{M+1}$ größer als die Summe der maximalen Bitraten $P_{M+1}$ sein sollte, genügt es, die Summe der maximalen Bitraten $P_{M+1}$ zu reservieren.

Die benötigte Bitrate $load_M$ füe M Verbindungen kann unter Annahme einer fiktiven Bitrate $R = S_M \times Q(R) \times \sqrt{V}$ berechnet werden, wobei $Q(R)$ eine festgelegte, empirisch bestimmte sogenannte Quantil-Funktion von R ist. Die benötigte Bitrate $load_M$ ist diejenige fiktive Bitrate R, für die die Beziehung

$$R = S_M + Q(R) \cdot \sqrt{V})$$

erfüllt ist.

Die Lösung dieser Gleichung kann iterativ durch geeignete Nährungsverfahren bestimmt werden.

Vorzugsweise kann die Quantil-Funktion $Q(R)$ zu $q_1 + q_2/R$ gewählt werden, wobei das hypobolische Quantil $q_1$ und der hypobolische Faktor $q_2$ der zugehörigen σ-Klasse empirisch durch Simulationsrechnungen bestimmt werden.

Dann kann $load_M$ durch numerisches Ziehen der Wurzel

$$load = x_0/2 + \sqrt{q_2} \cdot \sqrt{V} + x_0^2$$

bestimmt werden, wobei x0 gleich $q_1 \cdot \sqrt{V}$ ist.

Die Erfindung wird im folgenden unter Bezugnahme auf die Zeichnung beschrieben, in der

Fig. 1 ein Graph zur Erläuterung der Berechnung der benötigten Kapazität einer Anzahl statistisch multiplexbarer Verbindungen;

Fig. 2 ein Graph zur Illustration eines Iterationsverfahrens zur Berechnung der benötigten Kapazität; und

Fig. 3 ein Graph zur Erläuterung einer Anwendung des erfindungsgemäßen Verfahrens ist.

Eine Kommunikationseinrichtung wie beispielsweise eine Verbindungsleitung, ein Koppelfeld oder dergleichen hat eine gesamte zur Verfügung stehende Kapazität $R_{max}$, d. h. es kann eine Verbindung mit einer konstanten Bitrate $R_{max}$ angenommen werden.

Über die Kommunikationseinrichtungen wird eine Anzahl M von statistisch multiplexbaren Kommunikationsverbindungen übertragen, die durch eine Spitzenzellrate PCR und eine mittlere Zellrate SCR gekennzeichnet sind. $P_M=\Sigma PCR_i$ bezeichnet dann die Summe der Spitzenzellraten der M Verbindungen und $S_M=\Sigma SCR_i$ die Summe der mittleren Zellraten der Verbindungen.

$$V = \Sigma SCR_i(PCR_i\text{-}SCR_i)$$

die Abschätzung der Varianz der Zellraten der M Verbindungen.

Ist

$$S_M+\sqrt{V} \cdot Q(R) \leq R \tag{1}$$

für eine Bitrate erfüllt, so reicht diese Kapazität, um alle M Verbindungen anzunehmen. Dabei ist Q(R) eine empirisch bestimmte Quantil-Funktion. Für Q(R) ist die Funktion $q_1+q_2/R$ als gute Approximation bekannt, wobei die Faktoren $q_1$ und $q_2$ durch Simulationen bestimmt werden und von dem Verhältnis von Spitzenzellrate zur mittleren Zellrate der Verbindungen abhangen. $q_1$ liegt z. B. in der Größenordnung von 10, $q_2$ in der Größenordnung von $10^5$. Ungleichung 1 läßt sich dann schreiben als:

$$(q_1 + q_2/R) \cdot \sqrt{V} + S_M \leq R \tag{2}$$

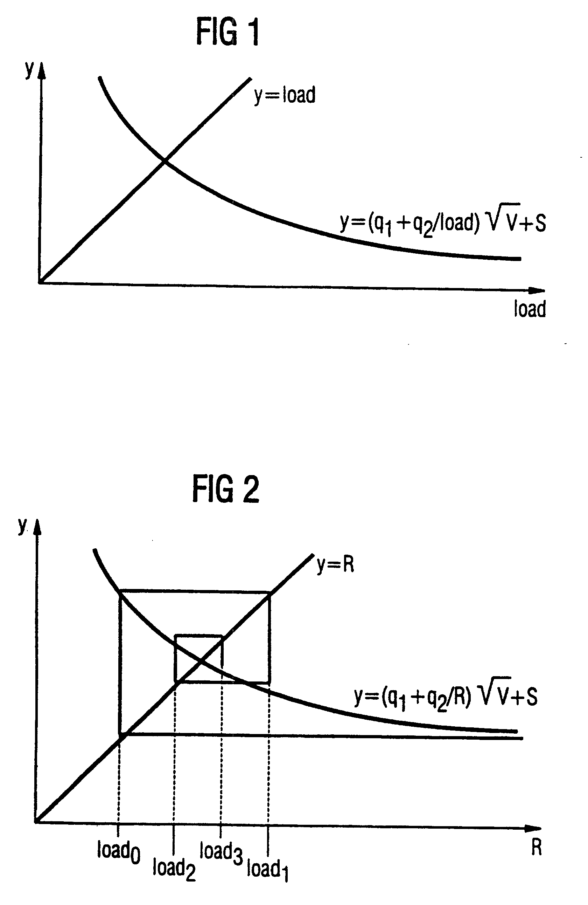

Die rechte und linke Seite der Ungleichung sind in Fig. 1 graphisch dargestellt. Die Funktion y(R)=R ist eine lineare, monoton steigende Funktion, während die Funktion $y=q_1+q_2/R\cdot\sqrt{V}+S_M$ mit höheren R hyperbelartig abnimmt. Der Schnittpunkt beider Graphen ist der Wert R=load, der die benötigte Kapazität (innerhalb der Genauigkeit der gemachten Annahmen) exakt angibt. Durch Bestimmung dieses Schnittpunktes R=load kann somit die von den M statistisch multiplexbaren Verbindungen erforderliche Kapazität exakt bestimmt werden, während bei der Sigma-Rule nur bestimmt wird, ob momentan eine neue Verbindung angenommen werden kann oder nicht. Die exakte Berechnung der Gesamtkapazität hat den Vorteil, daß sie nicht von der Reihenfolge der Annahme der Verbindungen abhängt. Außerdem kann die benötigte Kapazität und damit auch die momentan zur Verfügung stehende freie Kapazität angezeigt und Benutzern der Kommunikationseinrichtung mitgeteilt werden.

Zur Berechnung von load gibt es die folgenden Möglichkeiten. Einmal läßt sich die Gleichung

$$(q_1 + q_2/load) \cdot \sqrt{V} + S_M = load \tag{3}$$

nach load auflösen, wenn $x0:=q_1\cdot\sqrt{V}$ definiert ist:

$$load = x /2 + \sqrt{q_1} \cdot \sqrt{V} + x_0{}^2 \tag{4}$$

Alternativ läßt sich R=load auch iterativ bestimmen. Das Verfahren ist in Fig. 2 schematisch dargestellt. Vom Startpunkt $load_0=q_1\cdot\sqrt{V}+S_M$, wird load zu

$$load_{n+1} = (q_1+q_2/load_n) \cdot \sqrt{V} + S_M \tag{5}$$

iterativ bestimmt. Ein C-Programm zur Ausführung dieses Algorithmus ist der Patentanmeldung als Anlage beigefügt. Bei $10^7$ Berechnungen für die Verbindungsannahme lag der relative Fehler von load bei drei Iterationen unter $3\times10^{-4}$. Eine ungerade Anzahl von Iterationsschritten stellt sicher, daß die benötigte Kapazität überschätzt und nicht unterschätzt wird.

Die exakt berechnete momentane Kapazität $load_M$ für M Verbindungen der Kommunikationseinrichtung kann wiederum für eine effektive Annahmesteuerung der Kommunikationseinrichtung verwendet werden. Da die für M vorhandene Verbindungen benötigte Kapazität $load_M$ laufend zur Verfügung steht, kann bei einem neuen Verbindungswunsch mit einer Spitzenzellrate PCR und einer mittleren Zellrate SCR die Verbindung ohne weitere Berechnung angenommen werden, wenn die freie Kapazität $R_{max}$-$load_M$ größer PCR ist und ohne weitere Berechnung abgelehnt werden, wenn $R_{max}$-$load_M$ kleiner SCR ist. Lediglich wenn sich die Last der Kommunikationseinrichtung in dem dazwischenliegenden Bereich befindet, ist vor der Annahme eine Neuberechnung der Last $load_{M+1}$ der M+1 Verbindungen erforderlich. Sobald die Verbindung eingerichtet ist, wird die Lastberechnung auf alle bestehenden Verbindungen erstreckt.

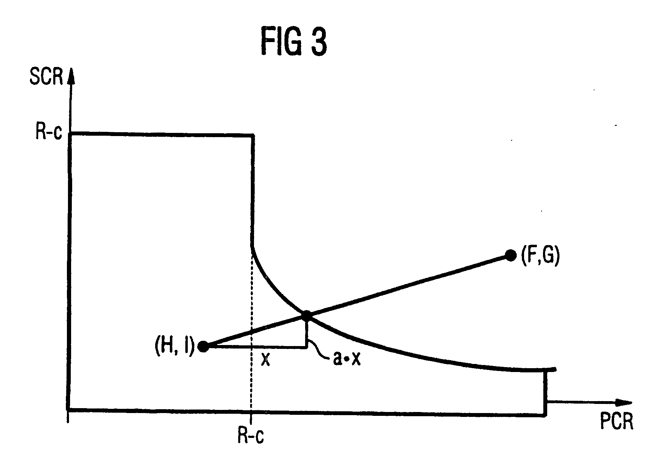

Unter Bezugnahme auf Fig. 3 wird eine weitere Anwendung der vorliegenden Erfindung erläutert.

Bei einer Verbindung mit variabler Bitrate kann diese neben der Spitzenzellrate F und der mittleren Zellrate G noch durch eine mindestens erforderliche Spitzenzellrate $H_{min}$ und eine mindestens erforderliche mittlere Zellrate $I_{min}$ gekennzeichnet sein. Ein Beispiel dafür ist ein Bildtelefondienst, der eine Mindestübertragungsbandbreite von beispielsweise 64 Kilobyte pro Sekunde benötigt, um überhaupt ein Bild aufbauen zu können. Eine höhere Bandbreite zur Echtzeitübertragung der Mimik oder dergleichen ist wünschenswert, aber nicht unbedingt erforderlich.

In Fig. 3 ist in einem Diagramm die mittlere Zellrate SCR gegen die Spitzenzellrate PCR aufgetragen. Die Spitzenzellrate F und die mittlere Zellrate G bilden den Punkt (F,G), der den Idealzustand der Verbindung kennzeichnet. Der durch die inimalen Zellraten $H_{min}$ und $I_{min}$ gebildete Punkt (H,I) gibt die Mindestanforderungen der Verbindung an. Die Aufgabe der Verbindungannahmesteuerung liegt nun darin, die Verbindung mit variabler (möglichst großer) Bandbreite anzunehmen, wenn sichergestellt ist, daß die Mindestbedingungen $H_{min}$, $I_{min}$ immer erfüllt werden. Diese Annahmesteuerung kann aufgrund der exakten Berechnung der zur Verfügung stehenden Kapazität $load_M$ realisiert werden.

Nimmt man die Parameterkombination vom Rand der grauen Fläche mit der Geraden durch (H,I) und (F,G) an, wird die zur Verfügung stehende Kapazität voll ausgeschöpft und die vorgegebenen Raten gut berücksichtigt. a ist die Steigung der Geraden (H,I)-(F,G) und x die Differenz der gesuchten Spitzenzellrate zu $H_{min}$. Dann ergibt sich die gesuchte mittlere Zellrate c als Summe der minimalen Zellrate und a.x:

$$c = (q_1+q_2/c) \cdot \sqrt{V}+(I+a\cdot x) \cdot (H+x-(I+a\cdot x)) + S_M + I + a \cdot x \qquad (6)$$

wobei x der benötigten Kapazität load entspricht und aus Gleichungen (3) bis (5) berechnet werden kann. Gleichung (6) ist äquivalent zu einer quadratischen Gleichung in x und läßt sich durch geeignete numerische Iterationsverfahren berechnen.

Die Erfindung ermöglicht erstmals eine exakte Berechnung der benötigten Kapazität $load_M$ einer Anzahl M statistisch multiplexbarer Verbindungen, die durch eine Spitzenzellrate PCR und eine mittlere Zellrate SCR gekennzeichnet sind.

**Patentansprüche**

1. Verfahren zur Ermittlung einer benötigten Kapazität $load_M$ auf einer ATM-Kommunikationseinrichtung, von der eine Mehrzahl M statistisch multiplexbarer Verbindungen abgewickelt wird, gemäß dem die für die M bestehenden Verbindungen benötigte Kapazität $load_M$ bestimmt wird, indem eine Gleichung $G_Z$: **$load_Z = S_Z + Q(load_Z) * \sqrt{V_Z}$** für Z = M gelöst wird, wobei gilt:

   - $load_M$ ist eine Kapazität der M Verbindungen,
   - $S_M = \Sigma [ SCR_i ]$ mit $1 <= i <= M$,
   - $Q(load_M)$ ist eine festgelegte Funktion von $load_M$,
   - $V_M = \Sigma [ SCR_i * ( PCR_i - SCR_i ) ]$ mit $1 <= i <= M$,
   - $PCR_i$ ist eine Spitzenzellrate und $SCR_i$ ist eine mittlere Zellrate der Verbindung mit Index i.

2. Verfahren nach Anspruch 1,

**dadurch gekennzeichnet,**

**daß** eine neue Verbindung mit einer mittleren Zellrate $SCR_{M+1}$ bei einer maximalen Kapazität $R_{max}$ der ATM-Kommunikationseinrichtung angenommen wird, falls eine fiktive Kapazität $load_{M+1}$, die für die M bestehenden Verbindungen und die neue Verbindung bestimmt wird, indem die Gleichung $G_Z$ für Z = M+1 gelöst wird, gilt: $load_{M+1} <= R_{max}$.

3. Verfahren nach einem der Ansprüche 1 oder 2,
   **dadurch gekennzeichnet,**
   **daß** zusätzlich $P_{M+1}$, eine Summe der Spitzenzellraten $PCR_i$ der M bestehenden Verbindungen und der neuen Verbindung, bestimmt und die neue Verbindung angenommen wird, falls gilt:

$$Minimum\ (P_{M+1}, load_{M+1}) <= R_{max}.$$

4. Verfahren nach einem der Ansprüche 1 bis 3,
   **dadurch gekennzeichnet,**
   **daß** die benötigte Kapazität $load_M$ laufend zur Verfügung steht, die neue Verbindung eine Spitzenzellrate $PCR_{M+1}$ aufweist und vor Bestimmung der fiktiven Kapazität $load_{M+1}$ die neue Verbindung bereits angenommen wird, falls gilt:

$$load_M + PCR_{M+1} <= R_{max},$$

5. Verfahren zur Ermittlung einer noch übermittelbaren mittlere Zellrate $SCR_C$ und einer noch übermittelbaren Spitzenzellrate $PCR_C$ für eine neue Verbindung mit einer mittleren Zellrate $SCR_{M+1}$, einer Spitzenzellrate $PCR_{M+1}$, einer mittleren Mindestzellrate $SCR_{MIN}$ und einer Spitzenmindestzellrate $PCR_{MIN}$ auf einer ATM-Kommunikationseinrichtung, von der eine Mehrzahl M statistisch multiplexbarer Verbindungen abgewickelt wird, gemäß dem die noch übermittelbare mittlere Zellrate $SCR_C$ und die noch übermittelbare Spitzenzellrate $PCR_C$ bestimmt werden, indem eine Gleichung $G_Z$: **$load_{Z} = S_Z + Q(load_Z) * \sqrt{V_Z}$** für Z = C gelöst wird, wobei gilt:

- $load_C = SCR_C$,
- $S_C = S_M + SCR_C$, mit
  $S_M = \Sigma\ [\ SCR_i\ ]$ und $1 <= i <= M$,
- $Q(load_C)$ ist eine festgelegte Funktion von $load_C$,
- $V_C = V_M + (SCR_C) * (PCR_C - SCR_C)$, mit
  $V_M = \Sigma\ [\ SCR_i * (\ PCR_i - SCR_i\ )\ ]$ und $1 <= i <= M$,
- $SCR_C = SCR_{MIN} + a*x$,
- $PCR_C = PCR_{MIN} + x$,
- $a = (SCR_{M+1} - SCR_{MIN}) / (PCR_{M+1} - PCR_{MIN})$,
- $x = PCR_C - PCR_{MIN}$,
- $PCR_i$ ist die Spitzenzellrate und $SCR_i$ ist die mittlere Zellrate der Verbindung mit Index i.

und ohne Bestimmung der fiktiven Kapazität $load_{M+1}$ die neue Verbindung abgelehnt wird, falls gilt:

$$load_M + SCR_{M+1} > R_{max}.$$

6. Verfahren nach Anspruch 5,
   **dadurch gekennzeichnet,**
   **daß** die noch übermittelbare mittlere Zellrate $SCR_C$ und die noch übermittelbare Spitzenzellrate $PCR_C$ bestimmt werden, sofern die neue Verbindung mit der mittleren Zellrate $SCR_{M+1}$ und der Spitzenzellrate $PCR_{M+1}$ abgeleht und mit der mittleren Mindestzellrate $SCR_{MIN}$ und der Spitzenmindestzellrate $PCR_{MIN}$ angenommen würde.

7. Verfahren nach einem der vorherstehenden Ansprüche,
   **dadurch gekennzeichnet,**
   **daß** die Varianz $V_Z$ als

$$V_Z = \Sigma\,[\,SCR_i * (\,PCR_i - SCR_i\,)\,]$$

gewählt wird, wobei $PCR_i$ Spitzenzellraten der Z Verbindungen sind mit $1 <= i <= Z$.

**8.** Verfahren nach einem der vorherstehenden Ansprüche,
**dadurch gekennzeichnet,**
**daß** die festgelegte Funktion $Q(load_Z)$ als

$$Q(load_Z) = q_1 + q_2 / load_Z$$

gewählt wird, wobei $q_1$ ein hypobolisches Quantil und $q_2$ ein hypobolischer Faktor ist.

**9.** Verfahren nach einem der vorherstehenden Ansprüche,
**dadurch gekennzeichnet,**
**daß** die Lösung der Gleichung $G_Z$ iterativ bestimmt wird.

**10.** Verfahren nach den Ansprüchen 8 und 9,
**dadurch gekennzeichnet,**
**daß** die Iteration bei einem Startpunkt

$$load_0 = S_Z + q_1 * \sqrt{V_Z}$$

begonnen wird und in jedem Iterationsschritt $load_i$ durch

$$load_i = S_Z + (\,q_1 + q_2 / load_{i-1}\,) * \sqrt{V_Z}$$

bestimmt wird.

**11.** Verfahren nach Anspruch 10,
**dadurch gekennzeichnet,**
**daß** die Iteration nach einer ungeraden Anzahl von Iterationsschritten beendet wird.

**12.** Verfahren nach Anspruch 8,
**dadurch gekennzeichnet,**
**daß** die Kapazität $load_Z$ durch die Lösung einer weiteren Gleichung $GW_Z$:

$$load_Z = x_0/2 + \sqrt{q_2} \cdot \sqrt{V_Z + x_0^2}$$

bestimmt wird, wobei $x_0 = q_1 * \sqrt{V_Z}$ ist.

**13.** ATM-Kommunikationseinrichtung mit einer maximalen Kapazität $R_{max}$ mit einer Einrichtung zur Anzeige einer noch verfügbaren Restkapazität $R_{rest}$ der ATM-Kommunikationseinrichtung, wobei $R_{rest} = R_{max} - load_M$ ist und $load_M$ für M bestehende Verbindungen gemäß dem Verfahren nach Anspruch 1 ermittelt wird.

**Claims**

**1.** Method for determining a required capacity $load_M$ on an ATM communication device by which a plurality M of connections which can be statistically multiplexed is being handled, according to which the capacity $load_M$ required for the M existing connections is determined by resolving an equation $G_Z$: **$load_Z = S_Z + Q(load_Z) * \sqrt{V_Z}$** for Z = M, where the following applies:

- $load_M$ is a capacity of the M connections,
- $S_M = \Sigma\,[\,SCR_i\,]$ with $1 <= i <= M$,
- $Q(load_M)$ is a fixed function of $load_M$,
- $V_M = \Sigma\,[\,SCR_i * (\,PCR_i - SCR_i\,)\,]$ with $1 <= i <= M$,

PCR$_i$ is a peak cell rate and SCR$_i$ is an average sustainable cell rate of the connection with index i.

2. Method according to Claim 1, **characterized in that**, given a maximum capacity $R_{max}$ of the ATM communication device, a new connection with an average sustainable cell rate $SCR_{M+1}$ is accepted if a fictitious capacity $load_{M+1}$, which is determined for the M existing connections and the new connection by resolving the equation $G_Z$ for $Z = M+1$, satisfies the condition: $load_{M+1} <= R_{max}$.

3. Method according to one of Claims 1 or 2, **characterized in that** $P_{M+1}$, a sum of the peak cell rates $PCR_i$ of the M existing connections and the new connection, is additionally determined and the new connection is accepted if the following condition is satisfied:

$$\text{minimum } (P_{M+1}, load_{M+1}) <= R_{max}.$$

4. Method according to one of Claims 1 to 3, **characterized in that** the required capacity $load_M$ is continuously available, the new connection has a peak cell rate $PCR_{M+1}$ and the new connection is already accepted before determination of the fictitious capacity $load_{M+1}$ if the following condition is satisfied:

$$load_M + PCR_{M+1} <= R_{max},$$

and the new connection is refused without determination of the fictitious capacity $load_{M+1}$ if the following condition is satisfied:

$$load_M + SCR_{M+1} > R_{max}.$$

5. A method for determining a still transmissible average sustainable cell rate $SCR_C$ and a still transmissible peak cell rate $PCR_C$ for a new connection with an average sustainable cell rate $SCR_{M+1}$, a peak cell rate $PCR_{M+1}$, an average minimum sustainable cell rate $SCR_{MIN}$ and a minimum peak cell rate $PCR_{MIN}$ on an ATM communication device, by which a plurality M of connections which can be statistically multiplexed is being handled, according to which the still transmissible average sustainable cell rate $SCR_C$ and the still transmissible peak cell rate $PCR_C$ are determined by resolving an equation $G_Z$: $\mathbf{load_Z = S_Z + Q(load_Z) * \sqrt{V_Z}}$ for $Z = C$, where the following applies:

- $load_C = SCR_C$,
- $S_C = S_M + SCR_C$ with
    $S_M = \Sigma\,[\,SCR_i\,]$ and $1 <= i <= M$,
- $Q(load_C)$ is a fixed function of $load_C$,
- $V_C = V_M + (SCR_C) * (PCR_C - SCR_C)$ with
    $V_M = \Sigma\,[\,SCR_i * (\,PCR_i - SCR_i\,)\,]$ and $1 <= i <= M$,
- $SCR_C = SCR_{MIN} + a*x$
- $PCR_C = PCR_{MIN} + x$,
- $a = (SCR_{M+1} - SCR_{MIN}) / (PCR_{M+1} - PCR_{MIN})$,
- $x = PCR_C - PCR_{MIN}$,
- PCR$_i$ is the peak cell rate and SCR$_i$ is the average sustainable cell rate of the connection with index i.

6. The method as claimed in claim 5, **characterized in that** the still transmissible average sustainable cell rate $SCR_C$ and the still transmissible peak cell rate $PCR_C$ are determined if the new connection with the average sustainable cell rate $SCR_{M+1}$ and the peak cell rate $PCR_{M+1}$ is refused and would be accepted with the average minimum sustainable cell rate $SCR_{MIN}$ and the minimum peak cell rate $PCR_{MIN}$.

7. Method according to one of the preceding claims, **characterized in that** the variance $V_Z$ is chosen as

$$V_Z = \Sigma \, [\, SCR_i * (\, PCR_i - SCR_i\,)\,]$$

where $PCR_i$ are peak cell rates of the Z connections with $1 <= i <= Z$.

**8.** Method according to one of the preceding claims, **characterized in that** the fixed function $Q(load_Z)$ is chosen as

$$Q(load_Z) = q_1 + q_2 / load_Z,$$

where $q_1$ is a hyperbolic quantile and $q_2$ is a hyperbolic factor.

**9.** Method according to one of the preceding claims, **characterized in that** the solution of the equation $G_Z$ is determined iteratively.

**10.** Method according to Claims 8 and 9, **characterized in that** the iteration is begun at a starting point

$$load_0 = S_Z + q_1 * \sqrt{V_Z}$$

and $load_i$ is determined in each iteration step by

$$load_i = S_Z + (q_1 + q_2 / load_{i-1}) * \sqrt{V_Z}.$$

**11.** Method according to Claim 10, **characterized in that** the iteration is ended after an odd number of iteration steps.

**12.** Method according to Claim 8, **characterized in that** the capacity $load_Z$ is determined by the solution of a further equation $GW_Z$:

$$load_Z = x_0/2 + \sqrt{q_2} \cdot \sqrt{V_Z + x_0^2},$$

where $x_0 = q_1 * \sqrt{V_Z}$.

**13.** ATM communication device with a maximum capacity $R_{max}$, with a device for indicating a still available residual capacity $R_{rest}$ of the ATM communication device, where $R_{rest} = R_{max} - load_M$ and $load_M$ is determined for M existing connections according to the method according to Claim 1.

**Revendications**

**1.** Procédé pour calculer une capacité nécessaire $load_M$ sur un dispositif de transmission ATM qui prend en charge une pluralité M de liaisons à multiplexage statistique, selon lequel on détermine la capacité $load_M$ nécessaire pour les M liaisons existantes en résolvant une équation $G_Z$ : $load_Z = S_Z + Q(load_Z) * \sqrt{V_Z}$ pour Z = M, où :

- $load_M$ est une capacité pour les M liaisons,
- $S_M = \Sigma \, [SCR_i]$ avec $1 \le i \le M$,
- $Q(load_M)$ est une fonction prédéterminée de $load_M$,
- $V_M = \Sigma \, [\, SCR_i * (PCR_i - SCR_i)\,]$ avec $1 \le i \le M$,
- $PCR_i$ est un débit de cellules de crête et $SCR_i$ est un débit de cellules moyen de la liaison ayant l'indice i.

**2.** Procédé selon la revendication 1,
**caractérisé en ce**
**qu'**une nouvelle liaison ayant un débit de cellules moyen $SCR_{M+1}$ est acceptée, dans le cas d'une capacité maximale $R_{max}$ du dispositif de transmission ATM, si une capacité fictive $load_{M+1}$ que l'on détermine, pour les M liaisons existantes et la nouvelle liaison, en résolvant l'équation $G_Z$ pour Z = M+1 satisfait l'équation : $load_{M+1} \le R_{max}$.

**3.** Procédé selon l'une des revendications 1 ou 2,
**caractérisé en ce**
**que** l'on détermine, en plus, $P_{M+1}$, une somme des débits de cellules maximums $PCR_i$ des M liaisons existantes et de la nouvelle liaison, et la nouvelle liaison est acceptée si l'équation

$$minimum\ (P_{M+1},\ load_{M+1}) \leq R_{max}$$

est vérifiée.

**4.** Procédé selon l'une des revendications 1 à 3,
**caractérisé en ce**
**que** la capacité nécessaire $load_M$ est disponible en permanence, la nouvelle liaison a un débit de cellules de crête $PCR_{M+1}$ et la nouvelle liaison est acceptée avant même la détermination de la capacité fictive $load_{M+1}$ si l'équation

$$load_M + PCR_{M+1} \leq R_{max}$$

est vérifiée, et la nouvelle liaison est refusée sans détermination de la capacité fictive $load_{M+1}$ si l'équation

$$load_M + SCR_{M+1} > R_{max}$$

est vérifiée.

**5.** Procédé pour déterminer un débit de cellules moyen encore transmissible $SCR_C$ et un débit de cellules de crête encore transmissible $PCR_C$ pour une nouvelle liaison ayant un débit de cellules moyen $SCR_{M+1}$, un débit de cellules de crête $PCR_{M+1}$, un débit de cellules minimal moyen $SCR_{MIN}$ et un débit de cellules minimal de crête $PCR_{MIN}$ sur un dispositif de transmission ATM qui prend en charge une pluralité M de liaisons à multiplexage statistique, selon lequel
on détermine le débit de cellules moyen encore transmissible $SCR_C$ et le débit de cellules de crête encore transmissible $PCR_C$ en résolvant une équation $G_Z$ :

$$load_Z = S_Z + Q(load_z) * \sqrt{V_z}\ pour\ Z = C,\ où :$$

- $load_c = SCR_c$,
- $S_c = S_M + SCR_{MIN} + a*x$, avec
  $S_M = \sum[SCR_i]$ et $1 \leq i \leq M$,
- $Q(load_c)$ est une fonction prédéterminée de $load_c$,
- $V_C = V_M + (SCR_c) * (PCR_c - SCR_c)$, avec
  $V_M = \Sigma\ [SCR_i * (PCR_i-SCR_i)]$ et $1 \leq i \leq M$,
- $SCR_c = SCR_{MIN} + a*x$,
- $PCR_c = PCR_{MIN} + x$
- $a = (SCR_{M+1}- SCR_{MIN}) / (PCR_{M+1} - PCR_{MIN})$,
- $x = PCR_c-PCR_{MIN}$
- $PCR_i$ est un débit de cellules de crête et $SCR_i$ est un débit de cellules moyen de la liaison ayant l'indice i.

**6.** Procédé selon la revendication 5,
**caractérisé en ce**
**que** le débit de cellules moyen encore transmissible $SCR_C$ et le débit de cellules de crête encore transmissible $PCR_C$ sont déterminés dans la mesure où la nouvelle liaison à débit de cellules moyen $SCR_{M+1}$ et à débit de cellules de crête $PCR_{M+1}$ a été refusée et où la nouvelle liaison à débit de cellules minimal moyen $SCR_{MIN}$ et à débit de cellules minimal de crête $PCR_{MIN}$ a été acceptée.

**7.** Procédé selon l'une des revendications précédentes,
**caractérisé en ce**
**que** la variance $V_Z$ est sélectionnée en tant que

$$V_Z = \Sigma\, [\, SCR_i * ( PCR_i - SCR_i)\,],$$

$PCR_i$ étant les débits de cellules maximums des Z liaisons, avec $1 \leq i \leq Z$.

**8.** Procédé selon l'une des revendications précédentes,
**caractérisé en ce**
**que** la fonction prédéterminée $Q(load_Z)$ est sélectionnée en tant que

$$Q(load_Z) = q_1 + q_2 / load_z,$$

$q_1$ étant un quantile hypobolique et $q_2$ un facteur hypobolique.

**9.** Procédé selon l'une des revendications précédentes,
**caractérisé en ce**
**que** la solution de l'équation $G_Z$ est déterminée de manière itérative.

**10.** Procédé selon les revendications 8 et 9,
**caractérisé en ce**
**que** l'itération commence avec un point de départ

$$load_0 = S_Z + q_1 * \sqrt{V_Z}$$

et, dans chaque opération de l'itération, $load_i$ est déterminée par l'équation

$$load_i = S_Z + \left( q_1 + q_2 / load_{i-1} \right) * \sqrt{V_Z}.$$

**11.** Procédé selon la revendication 10,
**caractérisé en ce**
**que** l'itération se termine au bout d'un nombre impair d'opérations d'itération.

**12.** Procédé selon la revendication 8,
**caractérisé en ce**
**qu'**on détermine la capacité $load_Z$ en résolvant une autre équation $GW_Z$ :

$$load_Z = x_0/2 + \sqrt{q_2} \cdot \sqrt{V_Z} + x_0^2,$$

$x_0$ étant égal à $q_1 * \sqrt{V_Z}$.

**13.** Dispositif de transmission ATM de capacité maximale $R_{max}$, comprenant
un dispositif pour indiquer une capacité restante encore disponible $R_{rest}$ du dispositif de transmission ATM,
$R_{rest}$ étant égale à $R_{max}$ - $load_M$ et $load_M$ étant déterminée pour M liaisons existantes conformément au procédé
selon la revendication 1.

# FIG 1

$$y = \text{load}$$

$$y = (q_1 + q_2/\text{load}) \sqrt{V} + S$$

load

# FIG 2

$$y = R$$

$$y = (q_1 + q_2/R) \sqrt{V} + S$$

$\text{load}_0$   $\text{load}_2$   $\text{load}_3$   $\text{load}_1$

R

# FIG 3